(19) Europäisches Patentamt

European Patent Office

Office européen des brevets

(11) Veröffentlichungsnummer: **0 247 517 B1**

(12) **EUROPÄISCHE PATENTSCHRIFT**

(45) Veröffentlichungstag der Patentschrift: **18.11.93**

(21) Anmeldenummer: **87107392.0**

(22) Anmeldetag: **21.05.87**

(51) Int. Cl.5: **C08J 5/18**, B29C 55/02

(54) **Hochleitfähiges filmförmiges Polyacetylen.**

(30) Priorität: **24.05.86 DE 3617505**

(43) Veröffentlichungstag der Anmeldung:
**02.12.87 Patentblatt 87/49**

(45) Bekanntmachung des Hinweises auf die
Patenterteilung:
**18.11.93 Patentblatt 93/46**

(84) Benannte Vertragsstaaten:
**BE DE FR GB NL**

(56) Entgegenhaltungen:
**EP-A- 0 065 691**
**EP-A- 0 088 301**
**GB-A- 2 072 197**

(73) Patentinhaber: **BASF Aktiengesellschaft
Carl-Bosch-Strasse 38
D-67063 Ludwigshafen(DE)**

(72) Erfinder: **Naarmann, Herbert, Dr.
Haardtblick 15
D-6719 Wattenheim(DE)**
Erfinder: **Theophilou, Nicolas, Dr.
Brechlochstrasse 9
D-6700 Ludwigshafen(DE)**

**Beschreibung**

Die Erfindung betrifft hochleitfähiges filmförmiges Polyacetylen, wie es erhalten wird durch Polymerisation von Acetylen bei Raumtemperatur mit Hilfe eines Katalysators, der aus dem Reaktionsprodukt von Aluminiumalkyl und Titan(IV)säureester in Silikonöl besteht und anschließendes Recken und Dotieren des Filmes, wobei das Recken aus katalysatorhaltigem oder aus katalysatorfrei-gewaschenem und gequollenem Film erfolgt und ein ungereckter Polyacetylenfilm verwendet wird, der im wesentlichen frei von $sp^3$-hybridisierten C-Atomen ist.

Durch die Arbeiten von Shirakawa ist es bekannt geworden, daß die Polymerisation von Acetylen an Ziegler-Katalysatoren mechanisch feste Filme aus Poly(acetylen) liefern kann (vgl. Journal of Polymer Science, Polymer Chemistry Edition, 12 (1974), 11-20). Insbesondere bei höheren Katalysatorkonzentrationen bilden sich filmförmige Poly(acetylene) mit einer ausreichenden mechanischen Festigkeit (vgl. auch DE-OS 3 120 441).

Ebenfalls von Shirakawa wird in Journal of Polymer Science, Polymer Letters Edition, 17 (1979), 195-201, beschrieben, daß nach dem Shirakawa-Verfahren hergestellte Filme gereckt werden können, wobei eine gewisse Orientierung und eine Anisotropie der elektrischen Leitfähigkeit zu beobachten ist. Es finden sich jedoch keinerlei Angaben über die Bedingungen des Reckens und die erzielten Leitfähigkeitswerte sind für viele Anwendungen noch zu niedrig.

In der EP-A-88 301 wird ein Verfahren zur Herstellung von Polyacetylen-Filmen beschrieben, welche im Vergleich zu den Shirakawa-Filmen eine verbesserte elektrische Leitfähigkeit und bessere mechanische Eigenschaften aufweisen. Jedoch ist auch die elektrische Leitfähigkeit dieser Filme für einige Anwendungszwecke noch nicht ausreichend.

In der GB-A-2072197 ist angegeben, Formteile aus Polyacetylen durch Verpressen von gelartigem oder gequollenen Mischungen aus Polyacetylen und einem Lösungsmittel herzustellen; dieses Verfahren ist jedoch offensichtlich nicht geeignet, hoch leitfähiges Polyacetylen herzustellen, denn die angegebene Leitfähigkeit liegt im Bereich von $10^{-7}$ reziproke Ohm pro cm.

Aufgabe der vorliegenden Erfindung war es daher, hochleitfähiges filmförmiges Polyacetylen zur Verfügung zu stellen, welches neben einer hohen elektrischen Leitfähigkeit auch gute mechanische Eigenschaften mit sich bringt.

Erfindungsgemäß wird diese Aufgabe gelöst durch hochleitfähiges filmförmiges Polyacetylen, welches durch Recken von katalysatorhaltigem oder im wesentlichen katalysatorfreien gequollenem filmförmigen Polyacetylen, welches im wesentlichen frei von Anteilen an $sp^3$-hybridisierten C-Atomen ist, erhältlich ist.

Das erfindungsgemäße hochleitfähige filmförmige Polyacetylen ist erhältlich durch Recken von filmförmigem Polyacetylen, welches noch Katalysator enthält oder welches nach dem Auswaschen des Katalysators in einem geeigneten Lösungsmittel gequollen wird.

Beim Recken der katalysatorenthaltenden Filme werden Streckungsraten von bis zu 300 % erreicht; gequollene, im wesentlichen katalysatorfreie Polyacetylen-Filme lassen sich sogar bis zu Streckungsraten von 600 % recken. Die Streckungsraten beziehen sich hier jeweils auf die zusätzliche Längenausdehnung durch das Recken, d.h. eine Streckungsrate von 100 % entspricht einer Verdoppelung der Längenausdehnung des Polyacetylen-Films in Streckrichtung.

Nach erfolgtem Recken können die erhaltenen erfindungsgemäßen hochleitfähigen filmförmigen Polyacetylene in an sich bekannter Weise weiter verarbeitet werden.

Katalysatorhaltige Filme werden mit geeigneten Lösungsmitteln gewaschen und so vom Katalysator befreit und anschließend nach den herkommlichen Verfahren dotiert. Wurden bereits katalysatorfreie Filme zum Recken eingesetzt, so entfällt der Schritt des Waschens und es kann direkt anschließend dotiert werden.

Es sei nochmals darauf hingewiesen, daß katalysatorfreie PolyacetylenFilme nach dem Auswaschen des Katalysators in einem geeigneten Losungsmittel gequollen werden müssen. Gewaschene Polyacetylen-Filme die diese Behandlung nicht erfahren haben, lassen sich aufgrund ihrer schlechteren mechanischen Eigenschaften nicht in gleichem Maße recken. Vorzugsweise erfolgt das Quellen direkt nach dem Auswaschen des Katalysators.

Die Quellungszeit der gewaschenen Polyacetylen-Filme liegt im allgemeinen im Bereich von 2 bis 100, vorzugsweise im Bereich von 6 bis 50 und insbesondere im Bereich von 12 bis 48 Stunden.

Als Lösungsmittel zur Quellung seien hier nur Toluol und Benzol genannt.

Wie bereits erwähnt, ist es für die Erzielung der außergewöhnlich hohen elektrischen Leitfähigkeiten der erfindungsgemäßen filmförmigen Polyacetylene erforderlich, zum Recken Polyacetylen-Filme einzusetzen, die im wesentlichen frei von Anteilen an $sp^3$-hybridisierten C-Atomen sind. Vorzugsweise werden solche Filme eingesetzt, deren Gehalt an $sp^3$-hybridisierten C-Atomen weniger als 0,5 Mol-%, bezogen auf den Gesamtgehalt des Polyacetylens an C-Atomen, aufweisen. Ein höherer Anteil an sp³-hybridisierten C-Atomen führt bereits bei den Ausgangsfilmen zu einer niedrigeren elektrischen Leitfähigkeit und dementsprechend sind auch die nach dem Recken erzielbaren elektrischen Leitfähigkeiten geringer als bei Filmen mit niedrigem Anteil an sp³-hybridisierten C-Atomen. Sp³-hybridisierte C-Atome sind C-Atome, von denen 4 Einfachbindungen ausgehen, die miteinander einen Winkel von etwa 109,5° bilden.

Filme, die die vorgenannten Voraussetzungen erfüllen, werden z.B. nach dem in der EP-A-88 301 beschriebenen Verfahren erhalten. Nähere Einzelheiten des Herstellungsverfahrens sind dieser Druckschrift zu entnehmen.

Dieses Verfahren besteht darin, daß eine einen Katalysator nach Shirakawa enthaltende Lösung mit einer z.B. durch Zusatz eines Polysiloxans (Silikonöl) eingestellten Viskosität von 5 bis 50 000 mPa•s (20°C) als Reaktionsumgebung eingesetzt wird; die Lösung wird auf eine Trägerfolie in dünner Schicht aufgebracht und der Einwirkung von gasförmigen Acetylen ausgesetzt.

Die Leitfähigkeiten dieser Filme nach Auswaschen des Katalysators und Dotieren mit den bekannten Dotierungsmitteln liegen im allgemeinen im Bereich von 200 bis 2000 s/cm und das spezifische Gewicht im Bereich von 0,6 bis 0,8, vorzugsweise 0,65 bis 0,75 g/cm³. In diesen beiden Eigenschaften unterscheiden sich die nach der EP-A-88 301 erhaltenen Filme wesentlich von den herkömmlichen nach dem Shirakawa-Verfahren erhaltenen Filmen.

Gemäß einer Variante des Reckverfahrens werden die nach der Herstellung in Inert-Atmosphäre (z.B. unter Stickstoff oder Argon) erhaltenen filmförmigen Poly(acetylene) direkt nach der Polymerisation ohne zwischengeschalteten Verfahrensschritt, gegebenenfalls zusammen mit dem Träger, auf dem sie aufgebracht sind, gereckt. Wie bereits erwähnt, lassen sich dadurch Streckungsraten bis zu 300 %, vorzugsweise von 100 bis 250 % und insbesondere von 150 bis 250 %, erzielen.

Nach erfolgtem Recken werden die Filme dann in an sich bekannter Weise gewaschen, d.h. der Katalysator entfernt, und anschließend mit den bekannten Dotierungsmitteln dotiert. Verfahren zur Dotierung und Dotierungsmittel sind z.B. in der EP-A-36 118 beschrieben, so daß sich hier nähere Angaben erübrigen.

In jedem Fall ist es vorteilhaft, die gereckten und dotierten Filme unter Ausschluß von Luftsauerstoff aufzubewahren, da durch den Einfluß von Sauerstoff und Feuchtigkeit die Leitfähigkeit beeinträchtigt wird.

Die erzielbaren Leitfähigkeiten betragen im Fall der gereckten katalysatorhaltigen Filme nach Dotierung, z.B. mit gesättigter Jodlösung, bis zu 15 000 S/cm, abhängig von der Streckungsrate. Mit zunehmender Streckungsrate ist eine stetige Zunahme der elektrischen Leitfähigkeit zu beobachten.

Bei Streckungsraten im Bereich von 200 % werden durch Recken katalysatorhaltiger Filme, die gemäß der EP-A-88 301 hergestellt wurden, elektrische Leitfähigkeiten im Bereich von 8000 bis 11 000, insbesondere im Bereich von 8500 bis 10 000 S/cm erhalten.

Parallel zum starken Anstieg der elektrischen Leitfähigkeit in Streck- bzw. Orientierungsrichtung ist ein Abfall der elektrischen Leitfähigkeit senkrecht zur Orientierungsrichtung zu beobachten, d.h. es tritt eine zunehmende Anisotropie der elektrischen Leitfähigkeit auf.

Der Anisotropie-Faktor, d.h. das Verhältnis von elektrischer Leitfähigkeit in Orientierungsrichtung zur elektrischen Leitfähigkeit senkrecht zur Orientierungsrichtung steigt ebenfalls mit zunehmendem Streckungsgrad und erreicht im allgemeinen Werte im Bereich von 3 bis 50, insbesondere von 5 bis 40.

Im Falle der Reckung im wesentlichen katalysatorfreier, gequollener Polyacetylen-Filme werden infolge der noch höheren möglichen Streckungsraten (bis zu 600 %) noch höhere Leitfähigkeiten erzielt. Bei Streckungsraten von 150 bis 550 % liegen die elektrischen Leitfähigkeiten nach Dotierung im allgemeinen im Bereich von 2500 bis 11000 S/cm (gemessen als spez. elektrische Leitfähigkeit [S/cm]).

Wie bei der Reckung der katalysatorhaltigen Filme ist mit zunehmender Streckungsrate eine Zunahme der elektrischen Leitfähigkeit und auch eine Zunahme der Anisotropie der elektrischen Leitfähigkeit zu beobachten.

Die Anisotropie-Faktoren erreichen Werte in der gleichen Größenordnung wie bei der Reckung von katalysatorenthaltenden Polyacetylen-Filmen.

Beim Strecken von Polyacetylen-Filmen auf einem Trägermaterial sind die erzielbaren Streckungsraten infolge der limitierenden mechanischen Eigenschaften des Trägermaterials im allgemeinen geringer als bei der Reckung der Polyacetylen-Filme allein. Die Streckungsraten sind selbstverständlich abhängig von der Art des verwendeten Trägermaterials und erreichen Werte von mehr als 500 %.

Die Reckung kann ganz allgemein bei Temperaturen im Bereich von 0 bis 200°C, insbesondere im Bereich von 15 bis 150°C, erfolgen. Wegen des bereits erwähnten negativen Einflusses von Feuchtigkeit und Sauerstoff sollte die Reckung unter Inert-Atmosphäre, z.B. unter Stickstoff oder Argon, erfolgen.

In der Praxis wird ein Polyacetylen-Film, der gereckt werden soll, an einem Ende eingespannt und am anderen Ende mit einer entsprechenden Zugvorrichtung kontinuierlich in einer Richtung gereckt.

Die erfindungsgemäßen hochleitfähigen filmförmigen Polyacetylene eignen sich aufgrund ihrer herausragend hohen elektrischen Leitfähigkeiten besonders zur Herstellung von Elektroden mit hoher Wirksamkeit, zur Herstellung von Materialien zur Abschirmung gegen elektromagnetische Wellen und ganz allgemein für Sensoren.

Die Leitfähigkeiten im Bereich von 10 000 S/cm, die die erfindungsgemäßen hochleitfähigen filmförmigen Poly(acetylene) zeigen, liegen, bezogen auf das Volumen infolge des geringen spezifischen Gewichts der Polyacetylen Filme über denen vieler Metalle, lediglich der Wert von Kupfer wird nicht erreicht. Infolgedessen sind auch Anwendungen denkbar, in denen die erfindungsgemäßen filmförmigen Poly-(acetylene) Metalle hinsichtlich der elektrischen Leitfähigkeit ersetzen könnten.

Alle Arbeiten in den folgenden Beispielen wurden unter Inertatmosphäre durchgeführt.

Beispiel 1

Durch tropfenweise Zugabe von 0,24 Mol Triethylaluminium zu einer kräftig durchgerührten Lösung von 0,12 Mol Tetrabutoxy-titan in 50 ml Silikonöl (AV 1000® - eingetragenes Warenzeichen der Wacker-Chemie) wurde bei einer Temperatur von 40°C unter Argonatmosphäre ein Katalysatorsystem hergestellt.

Diese Lösung wurde auf einen Träger aus Polyester aufgebracht und anschließend unter Inertatmosphäre Acetylen (Reinheit >99 %) gasförmig aufgebracht und polymerisiert. Nach 7 Minuten Polymerisation wurde ein Film mit einer Schichtdicke von 35 $\mu$m erhalten, der vom Polyester abgelöst wurde, anschließend gereckt und dann katalysatorfrei gewaschen wurde.

Das anschließende Dotieren erfolgte mit gesättigter Jod/$CCl_4$-Lösung. Der zu dotierende Film wurde jeweils 1 h bei Raumtemperatur unter Luft- und Lichtausschluß in der gesättigten Jod-Lösung aufbewahrt. Der so dotierte Film wurde dreimal mit $CCl_4$ gewaschen und 20 Minuten unter Argon bei 30°C und 0,1 mbar Druck getrocknet.

Die Zunahme der elektrischen Leitfähigkeit in Orientierungsrichtung sowie die entsprechende Abnahme senkrecht zur Orientierungsrichtung und die Anisotropie-Faktoren, d.h. das Verhältnis von elektrischer Leitfähigkeit in Orientierungsrichtung zu elektrischer Leitfähigkeit senkrecht zur Orientierungsrichtung sind der Tabelle zu entnehmen.

## Tabelle

| Streckungsrate | 0 % | 100 % | 120 % | 140 % | 200 % | 250 % |
|---|---|---|---|---|---|---|
| Elektrische Leitfähigkeit in Orientierungsrichtung S/cm | 1850 | 4350 | 5050 | 8600 | 9740 | 10800 |
| elektrische Leitfähigkeit senkrecht zur Orientierungs-richtung S/cm | 1850 | 780 | 560 | 400 | 350 | 300 |
| Anisotropie-Faktor | 1,0 | 6,3 | 9,0 | 21,5 | 27,8 | 36,0 |

Beispiel 2

Es wurde wie in Beispiel 1 gearbeitet, lediglich anstelle des Polyesters eine Polyethylenfolie mit 10 $\mu$m Dicke eingesetzt und statt 7 min betrug die Polymerisationszeit nur 3 min. Der Polyacetylenfilm haftete fest auf der Polyethylenfolie.

a) Der Polyacetylenfilm wurde mit der Trägerfolie katalysatorfeucht gereckt, anschließend der Katalysator ausgewaschen und der Polyacetylenfilm auf der Polyethylenfolie unter den gleichen Bedingungen wie in Beispiel 1 dotiert.

4

Bei einer Streckungsrate von 200 % wurde eine elektrische Leitfähigkeit von 2900 S/cm erhalten.

b) Der Polyacetylenfilm wurde mit HCl-haltigem Methanol gewaschen, anschließend zum Quellen 10 h in Toluol aufbewahrt (bei Raumtemperatur in einem Überschuß von Lösungsmittel) und dann gereckt. Nach Dotierung (wie in Beispiel 1) betrug die elektrische Leitfähigkeit bei einer Streckungsrate von 550 % 7900 S/cm.

## Patentansprüche

1. Hochleitfähiges Polyacetylen, wie es erhalten wird durch Polymerisation von Acetylen bei Raumtemperatur mit Hilfe eines Katalysators, der aus dem Reaktionsprodukt von Aluminiumalkyl und Titan(IV)-säureester in Silikonöl besteht und anschließendes Recken und Dotieren des Filmes, wobei das Recken aus katalysatorhaltigem oder aus katalysatorfrei-gewaschenem und gequollenem Film erfolgt und ein ungereckter Polyacetylenfilm verwendet wird, der im wesentlichen frei von $sp^3$-hybridisierten C-Atomen ist.

## Claims

1. A highly conductive polyacetylene as obtained by polymerization of acetylene at room temperature with the aid of a catalyst which consists of the reaction product of an alkylaluminum and a titanic(IV) ester in silicone oil and subsequent orientation and doping of the film, orientation being effected from catalyst-containing film or from a film which has been washed catalyst-free and swelled, and an unoriented polyacetylene film which is essentially free of $sp^3$-hybridized carbon atoms being used.

## Revendications

1. Polyacétylène fortement conducteur, tel qu'on l'obtient par la polymérisation de l'acétylène à la température ambiante à l'aide d'un catalyseur qui se compose du produit de la réaction d'un alkylaluminium et d'un ester d'acide titanique (IV) dans de l'huile de silicone, polymérisation suivie de l'étirage et du dopage du film, où l'étirage s'effectue à partir du film contenant du catalyseur, ou débarrassé du catalyseur par lavage et gonflé et on utilise un film de polyacétylène non étiré sensiblement dépourvu d'atomes de carbone hybridés $sp^3$.